(19) Europäisches Patentamt
European Patent Office
Office européen des brevets

(11) **EP 4 545 982 A1**

(12) **EUROPEAN PATENT APPLICATION**
published in accordance with Art. 153(4) EPC

(43) Date of publication:
**30.04.2025 Bulletin 2025/18**

(51) International Patent Classification (IPC):
**G01R 29/08** (2006.01)

(21) Application number: 23827020.1

(52) Cooperative Patent Classification (CPC):
**G01R 29/08**

(22) Date of filing: **09.06.2023**

(86) International application number:
**PCT/JP2023/021571**

(87) International publication number:
**WO 2023/248834 (28.12.2023 Gazette 2023/52)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **24.06.2022 US 202263355442 P**

(71) Applicants:
• **Tohoku University**
  **Sendai-shi, Miyagi 980-8577 (JP)**
• **National Institute of Information and Communications Technology**
  **Koganei-shi,**
  **Tokyo 184-8795 (JP)**

(72) Inventors:
• **TADOKORO, Satoshi**
  **Sendai-shi, Miyagi 980-8577 (JP)**

• **OHNO, Kazunori**
  **Sendai-shi, Miyagi 980-8577 (JP)**
• **OKADA, Yoshito**
  **Sendai-shi, Miyagi 980-8577 (JP)**
• **KOJIMA, Shotaro**
  **Sendai-shi, Miyagi 980-8577 (JP)**
• **NARA, Takaaki**
  **Sendai-shi, Miyagi 980-8577 (JP)**
• **SHIGA, Nobuyasu**
  **Sunnyvale, California 94085 (US)**
• **YASUDA, Satoshi**
  **Koganei-shi, Tokyo 184-8795 (JP)**
• **TAKIZAWA, Kenichi**
  **Koganei-shi, Tokyo 184-8795 (JP)**
• **KAMEDA, Suguru**
  **Hiroshima-shi, Hiroshima 739-8511 (JP)**

(74) Representative: **Rings, Rolf**
  **Klingseisen, Rings & Partner**
  **Patentanwälte**
  **Postfach 10 15 61**
  **80089 München (DE)**

(54) **MEASUREMENT SYSTEM FOR RADIO WAVE PROPAGATION CHARACTERISTICS**

(57)     [Problem]
Provided is a measurement system for a radio wave propagation characteristic capable of achieving a measurement with higher accuracy by eliminating influences of a human and a wired cable in the measurement of the radio wave propagation characteristic in a space.

[Solution]
The measurement system for a radio wave propagation characteristic includes a base station 3 and a mobile terminal 20 wirelessly communicable with the base station 3. The base station 3 and the mobile terminal 20 are mutually synchronized in time, frequency, and phase. A propagation characteristic of a radio wave wirelessly communicated between the mobile terminal 20 moving in a measurement target space and the base station 3 is sequentially measured on a time-series basis in association with each piece of position information of the mobile terminal 20.

Fig. 1

**Description**

TECHNICAL FIELD

The present invention relates to a measurement system for a radio wave propagation characteristic appropriate for measuring a propagation characteristic of a radio wave transmitted from a base station using a mobile terminal moving in a space with high accuracy.

BACKGROUND ART

It has been known that a moving body, such as an unmanned aircraft, a vehicle, and a mobile phone, performs wireless communication in a space including a bridge, a tunnel, an indoor facility, and the like and measures a radio wave propagation characteristic at each position (for example, see Patent Document 1). However, in conventional methods, the propagation characteristics of a radio wave in a space are significantly affected by a surrounding environment. Especially, when a structural body or a human body exists around the moving body, the propagation characteristics of a radio wave are significantly affected by reflection, transmission, diffraction, and absorption of the radio wave. Depending on a communication position of the moving body, a radio wave with complex interference is received in some cases, and the communication quality is deteriorated in some cases.

Therefore, when a propagation characteristic of a radio wave transmitted and received between a mobile terminal installed in a moving body and a base station is obtained, a movement plan of the mobile terminal can be designed in consideration of the communication quality, and an object arrangement capable of improving the communication quality in a space can be proposed.

On the other hand, for an actual measurement or a simulation of the radio wave propagation characteristic in a space, there are problems as follows.

One of the methods for measuring a radio wave propagation characteristic in a space is a method using a network analyzer. However, when an antenna is moved, the position and shape of a wired cable connecting the antenna to the network analyzer change, and thus a phase variation occurs. Since the phase variation is also included in the measurement result, it is difficult to accurately measure the radio wave propagation characteristic.

A method in which a radio wave propagation characteristic is measured by wireless communication is also proposed. However, since a transmission terminal is not synchronized with a reception terminal in time, it is difficult to accurately measure the radio wave propagation characteristic.

Further, conventionally, while a technique in which intensity, position information, time, and the like of a radio wave radiated from a station are collected to create a map (for example, see Patent Document 1), and a method for reproducing a radio wave propagation characteristic by a simulation (for example, see Patent Document 2) are also proposed, the radio wave propagation characteristic cannot be fully reproduced in a complicated communication environment in some cases.

Patent Document 1: JP-A-2003-264494

Patent Document 2: JP-A-2014-006851

DISCLOSURE OF THE INVENTION

PROBLEMS TO BE SOLVED BY THE INVENTION

Therefore, the present invention has been made in consideration of the above-described problems, and it is an object of the present invention to provide a measurement system for a radio wave propagation characteristic capable of achieving a measurement with higher accuracy by eliminating influences of a human and a wired cable in the measurement of the radio wave propagation characteristic in a space.

SOLUTIONS TO THE PROBLEMS

To solve the above-described problems, the present inventors invented a measurement system for a radio wave propagation characteristic in which a base station is synchronized with a mobile terminal in time, frequency, and phase, and then a propagation characteristic of a radio wave wirelessly communicated between the mobile terminal moving in a measurement target space and the base station is sequentially measured on a time-series basis in association with each piece of position information of the mobile terminal.

A measurement system for a radio wave propagation characteristic in a space according to a first invention includes a base station and a mobile terminal wirelessly communicable with the base station. The base station and the mobile terminal are mutually synchronized in time, frequency, and phase. A propagation characteristic of a radio wave wirelessly communicated between the mobile terminal moving in a measurement target space and the base station is sequentially measured on a time-series basis in association with each piece of position information of the mobile terminal.

In the measurement system for a radio wave propagation characteristic in a space according to a second invention, which is in the first invention, as the propagation characteristic, reception time and a frequency, or a phase of the radio wave is measured.

In the measurement system for a radio wave propagation characteristic in a space according to a third invention, which is in the second invention, as the propagation characteristic, a polarized wave of the radio wave is measured.

In the measurement system for a radio wave propagation characteristic in a space according to a fourth invention, which is in the first invention, the base station and the mobile terminal are mutually synchronized using wireless two-way interferometry (Wi-Wi).

In the measurement system for a radio wave propagation characteristic in a space according to a fifth invention, which is in the first invention, the measured propagation characteristic is indicated on a two-dimensional coordinate or three-dimensional coordinate map of the measurement target space on which the position information of the mobile terminal is indicated.

In the measurement system for a radio wave propagation characteristic in a space according to a sixth invention, which is in the first invention, each of events in the measurement target space is determined based on a distribution of the propagation characteristic in the measurement target space of two-dimensional coordinates or three-dimensional coordinates on which the position information of the mobile terminal is indicated.

In the measurement system for a radio wave propagation characteristic in a space according to a seventh invention, which is in the fifth invention, each of events in the measurement target space is determined based on a difference between a distribution of the propagation characteristic and a distribution of a preliminarily acquired reference propagation characteristic.

In the measurement system for a radio wave propagation characteristic in a space according to an eighth invention, which is in the fifth invention, each of events in the measurement target space is determined based on a degree of disturbance of a distribution of the propagation characteristic.

In the measurement system for a radio wave propagation characteristic in a space according to a ninth invention, which is in the sixth invention, a movement of the mobile terminal is controlled based on a result of the determination of each of the events.

In the measurement system for a radio wave propagation characteristic in a space according to a tenth invention, which is in the first invention, an interval between adjacent measurement points is controlled based on a degree of disturbance of a distribution of the propagation characteristic.

EFFECTS OF THE INVENTION

According to the present invention with the above-described configurations, by transmitting a known signal pattern between the base station and the mobile terminal, the propagation characteristic is measured. At this time, the synchronization in frequency and time allows the synchronization in phase reference between the base station and the mobile terminal, thus allowing the measurement of especially the phase as the propagation characteristic with accuracy.

BRIEF DESCRIPTION OF THE DRAWINGS

Fig. 1 is a block diagram of a measurement system to which the present invention is applied.
Fig. 2 is a block configuration diagram of a mobile terminal installed in a moving body.
Fig. 3 is a block configuration diagram of a base station.
Fig. 4 is a diagram for describing an operation of the measurement system to which the present invention is applied.
Fig. 5 is a flowchart of a measurement sequence of a radio wave propagation characteristic.
Fig. 6 is a diagram illustrating an example of a map indicating a distribution of the radio wave propagation characteristic.
Fig. 7 is a flowchart of a measurement sequence for sequentially acquiring position information of each mobile terminal by a central control station side.
Fig. 8 is a diagram illustrating an example of a distribution of a reference propagation characteristic acquired in advance.
Fig. 9 is a diagram illustrating an example of determination of each event in a measurement target space based on the degree of disturbance of the distribution of the propagation characteristic.

DESCRIPTION OF PREFERRED EMBODIMENTS

The following describes a measurement system for a radio wave propagation characteristic to which the present invention is applied in detail with reference to the drawings.

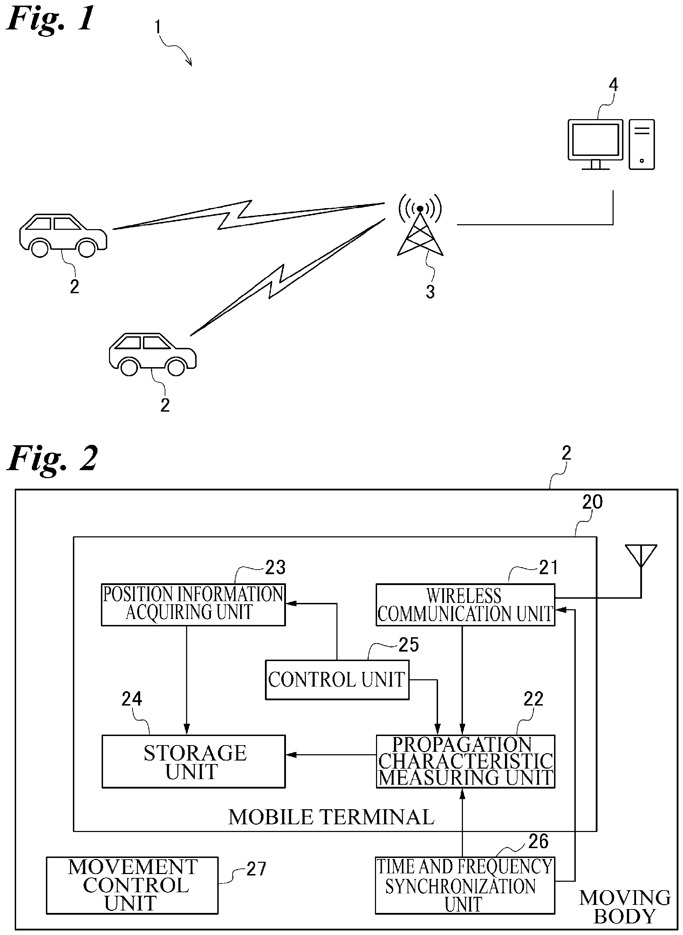

Fig. 1 is a block diagram of a measurement system 1 to which the present invention is applied. The measurement system 1 includes one or more moving bodies 2, a base station 3 that can communicate with the moving bodies 2 by wireless communication, and a central control station 4 that can perform wired communication or wireless communication with the base station 3.

While the moving body 2 is composed of any movable transportation means and composed of means two-dimensionally or three-dimensionally movable in a space, for example, a vehicle, a mobile robot, an unmanned aircraft, such as a drone, and a train, the moving body 2 is not limited thereto and includes a pedestrian with a smartphone or a wearable device. Especially, an unmanned aircraft, such as a drone, is three-dimensionally freely movable and has an advantage in measuring a radio wave propagation characteristic with high accuracy.

Fig. 2 illustrates a block configuration of a mobile terminal 20 installed in the moving body 2. The mobile terminal 20 is a terminal device that can perform wireless communication, such as a mobile phone, a smartphone, a tablet terminal, a wearable device, and a laptop personal computer (PC). Installing such a mobile terminal 20 in the moving body 2 allows wireless communication with the base station 3 at each position as a movement destination. The moving body 2 includes a movement control unit 27 for moving to each position. The movement control unit 27 includes any well-known technique necessary for achieving movement control of the moving body 2, and the movement control unit 27 is composed of means for automatic driving in a case of a vehicle and composed of means for flying an unmanned aircraft in a case of an unmanned aircraft. In the example of Fig. 1, a case of including a plurality of the moving bodies 2 from the aspect of increasing the speed and widening the range of the measurement is described as an example, but the configuration is not limited thereto, and a configuration including at least one moving body 2 may be employed.

As illustrated in Fig. 2, the mobile terminal 20 includes a wireless communication unit 21, a propagation characteristic measuring unit 22 connected to the wireless communication unit 21, a position information acquiring unit 23 that acquires position information at the measurement of the moving body 2, a storage unit 24, a control unit 25, and a time and frequency synchronization unit 26 each connected to the propagation characteristic measuring unit 22 and the position information acquiring unit 23. The time and frequency synchronization unit 26 is also connected to the wireless communication unit 21.

The wireless communication unit 21 performs a process of intermediate frequency superimposition, various kinds of modulation processes, filtering, and the like necessary for transmitting and receiving radio waves. The wireless communication unit 21 includes an antenna for transmitting and receiving radio waves. The antenna used for the wireless communication unit 21 may be configured by a pole-shaped omnidirectional antenna. The pole-shaped omnidirectional antennas may be horizontally and vertically provided at the moving body 2 to simultaneously measure a vertically polarized wave and a horizontally polarized wave. This allows observing a change of a polarization plane due to reflection or the like and performing a process of cancelling influences of a reflected wave and an antenna direction, and the like. For the antenna constituting the wireless communication unit 21, a plurality of the antennas may be provided at respective portions of the moving body 2, or an array antenna may be used.

The propagation characteristic measuring unit 22 measures a propagation characteristic of a radio wave received by the wireless communication unit 21. While the propagation characteristic of the radio wave measured by the propagation characteristic measuring unit 22 is an amplitude of the radio wave, a propagation delay, a frequency deviation, a phase, or the like, it is not limited thereto, and any parameter may be measured insofar as the propagation characteristic of the radio wave is indicated.

The position information acquiring unit 23 sequentially acquires position information of the moving body 2. The position information acquiring unit 23 may acquire the position information by, for example, a global navigation satellite system (GNSS), or may include a camera that can take an image of the moving body 2 or a moving body including it, a sensor for sensing an object outside, further, a sensor for sensing a traffic situation, or the like.

The storage unit 24 is configured by a memory, a hard disk, or the like that stores the propagation characteristic of the radio wave measured by the propagation characteristic measuring unit 22 and the position information acquired by the position information acquiring unit 23. The storage unit 24 stores the measured propagation characteristic of the radio wave in association with each piece of the acquired position information. The storage unit 24 also stores time information acquired by the mobile terminal 20. At this time, respective pieces of the acquired position information may be stored in association with the time information. By sequentially measuring the propagation characteristic and the position information on a time-series basis by the propagation characteristic measuring unit 22 and the position information acquiring unit 23, the storage unit 24 sequentially records the propagation characteristic of the radio wave on a time-series basis in association with each piece of the position information.

The control unit 25 is a control unit for controlling the whole mobile terminal 20 and is configured by, for example, a micro processor unit (MPU). The position information acquisition by the position information acquiring unit 23 and the measurement of the radio wave propagation characteristic by the propagation characteristic measuring unit 22 described above are performed under the control by the control unit 25. As described later, the control unit 25 also performs control for the synchronization in time, frequency, and phase with the base station 3.

The time and frequency synchronization unit 26 supplies reference time and a reference frequency to the propagation characteristic measuring unit 22 because it is necessary to synchronize the moving body 2 with the base station 3 in time and frequency in the measurement of the phase among the propagation characteristics. At this time, the synchronization via the time and frequency synchronization unit 26 may be performed using a method, for example, wireless two-way interferometry (Wi-Wi). The time and frequency synchronization unit 26 may transmit the synchronized frequency to the wireless communication unit 21. This allows the wireless communication unit 21 to use the synchronized frequency as a carrier frequency.

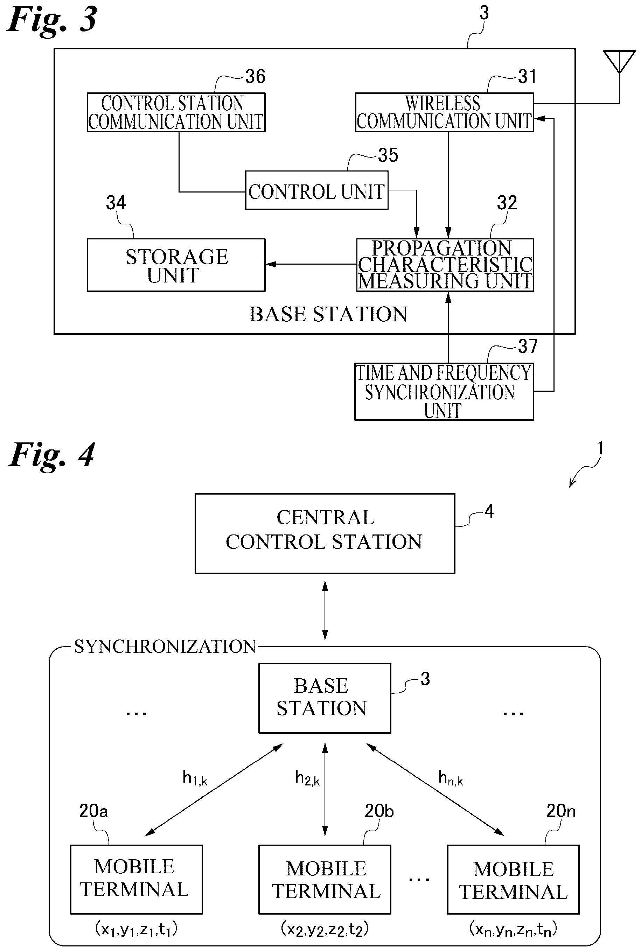

The base station 3 is a gateway station fixedly located at each place, and transmits and receives radio waves with the wireless communication units 21 of the respective moving bodies 2. Fig. 3 illustrates a configuration of the base station 3, and a wireless communication unit 31, a propagation characteristic measuring unit 32 connected to the wireless communication unit 31, a storage unit 34 and a control unit 35 connected to the propagation characteristic measuring unit 32, and a control station communication unit 36 and a time and frequency synchronization unit 37 connected to the control unit 35 are provided.

The wireless communication unit 31 performs a process of intermediate frequency superimposition, various kinds of modulation processes, filtering, and the like necessary for transmitting and receiving radio waves. The wireless communication unit 31 includes an antenna for transmitting and receiving radio waves.

The propagation characteristic measuring unit 32 measures a propagation characteristic of a radio wave received by the wireless communication unit 31. The kind of the propagation characteristic of the radio wave measured by the propagation characteristic measuring unit 32 is the same as that of the propagation characteristic measured by the propagation characteristic measuring unit 22.

The storage unit 34 is configured by a memory, a hard disk, or the like that stores the propagation characteristic of the radio wave measured by the propagation characteristic measuring unit 32.

When the propagation characteristics of the radio wave are all measured at the moving body 2 side, the configuration of the propagation characteristic measuring unit 32 provided at the base station 3 side may be omitted.

The control unit 35 is a control unit for controlling the whole base station 3 and is configured by, for example, an MPU. The measurement of the radio wave propagation characteristic by the propagation characteristic measuring unit 32 described above is performed under the control by the control unit 35. As described later, the control unit 35 also performs control for the synchronization in time, frequency, and phase with the moving body 2.

The control station communication unit 36 is a communication interface for wired or wireless communication with the central control station 4. In a case of wireless communication with the central control station 4, the control station communication unit 36 is configured by an antenna for converting a signal to be transmitted into a radio wave and converting a received radio wave into an electric signal. In a case of wired communication, the control station communication unit 36 is configured by a connector or the like for connecting a wired cable.

The time and frequency synchronization unit 37 supplies reference time and a reference frequency to the propagation characteristic measuring unit 32 because it is necessary to synchronize the moving body 2 with the base station 3 in time and frequency in the measurement of the phase among the propagation characteristics. At this time, the synchronization via the time and frequency synchronization unit 37 may be performed using a method, for example, Wi-Wi described above. The time and frequency synchronization unit 37 may transmit the synchronized frequency to the wireless communication unit 31. This allows the wireless communication unit 31 to use the synchronized frequency as a carrier frequency.

The central control station 4 functions as a central control unit that controls the respective mobile terminals 20 via the base station 3. The central control station 4 may be provided in the base station 3. The central control station 4 also functions as a server that receives and accumulates information transmitted from the base station 3. The central control station 4 functions as, in addition to a server, a communication device that performs wireless communication with each moving body 2 and performs wireless communication or wired communication with the base station 3. Information from the multiple moving bodies 2 has already been transmitted to the base station 3, and the information is transmitted to the central control station 4. Therefore, the central control station 4 can collect the information acquired by the respective mobile terminals 20 at one place. By collecting the information at one place as described above, the central control station 4 can bring information indicating more detailed situations in respective regions and in respective time slots acquired by the moving bodies 2 together into one database, and can use the information for various purposes. The central control station 4 further controls the mobile terminals 20 via the base station 3 based on the information collected from the respective mobile terminals 20.

Next, an operation of the measurement system 1 to which the present invention is applied is described.

In the measurement system 1, as illustrated in Fig. 4, first, the base station 3 is synchronized with mobile terminals 20a, 20b, ..., 20n installed in the respective moving bodies 2 in time, frequency, and phase. Then, each of the mobile terminals 20a, 20b, ..., 20n acquires acquired position information $(x_n, y_n, z_n)$ and reception time $t_n$ of a radio wave, and cooperates with the base station 3 to acquire data $h_{n,k}$ in which a propagation characteristic of the radio wave is associated with position information $(x_n, y_n, z_n, t_n)$. Here, **k** is an index number of the base station, and is assigned to each base station.

Between the base station 3 and the moving body 2, a radio wave propagation characteristic (a complex number) between a position $m_n$ of the mobile terminal 20 and the base station 3 relative to a frequency **f** and a polarized wave **p** at the time $t_n$ as a measurement parameter $h_{n,k}$ (f, p, $t_n$). As a specific acquisition method, after establishing phase synchronization between the base station 3 and the moving body 2 (the mobile terminal 20) by Wi-Wi or the like, a preliminarily set signal is transmitted from the base station 3 to the moving body 2 (the mobile terminal 20), and an amplitude and a phase of the received signal are observed and acquired.

The position at the position $m_n$ $(x_n, y_n, z_n)$ of the moving body 2 (the mobile terminal 20) is, for example, acquired with a GNSS by the moving body 2, acquired through signal processing between a plurality of the base stations 3 by the base station 3, or acquired with a motion capture system by the central control station 4.

The time $t_n$ at the position $m_n$ $(x_n, y_n, z_n)$ of the moving body 2 (the mobile terminal 20) is, for example, acquired with a GNSS by the moving body 2, acquired with a clock synchronized by Wi-Wi or the like, or acquired by adding a time stamp by the base station 3 or the central control station 4.

The radio wave propagation characteristic $h_{n,k}$ (f, p) at the position $m_n$ $(x_n, y_n, z_n)$ at the time $t_n$ of the moving body is acquired as $h_{n,k}$ (f, p, $x_n, y_n, z_n$) that is a radio wave propagation characteristic corresponding to the position $(x_n, y_n, z_n)$ associated with the time $t_n$.

To acquire the radio wave propagation characteristic $h_{n,k}$ of a specified space {X, Y, Z} as a final target, the radio wave propagation characteristic $h_{n,k}$ (f, p) is acquired so as to cover the space {X, Y, Z}. At this time, a distance between adjacent measurement points (for example, $(x_i, y_i, z_i)$ and $(x_{i+1}, y_{i+1}, z_{i+1})$) is equal to or less than a specified distance $d_{max}$ (for example, 1/8 wavelength).

A phase difference thereof $(|\text{angle}(h_{j,k} (f, p, x_i, y_i, z_i)) - \text{angle}(h_{j,k} (f, p, x_{i+1}, y_{i+1}, z_{i+1}))|)$ is equal to or less than a specified phase difference $\theta_{max}$ (for example, $\pi/4$). To satisfy this, the central control station 4 controls the position and the measurement timing of the moving body 2 (the mobile terminal 20).

The following describes a specific sequence.

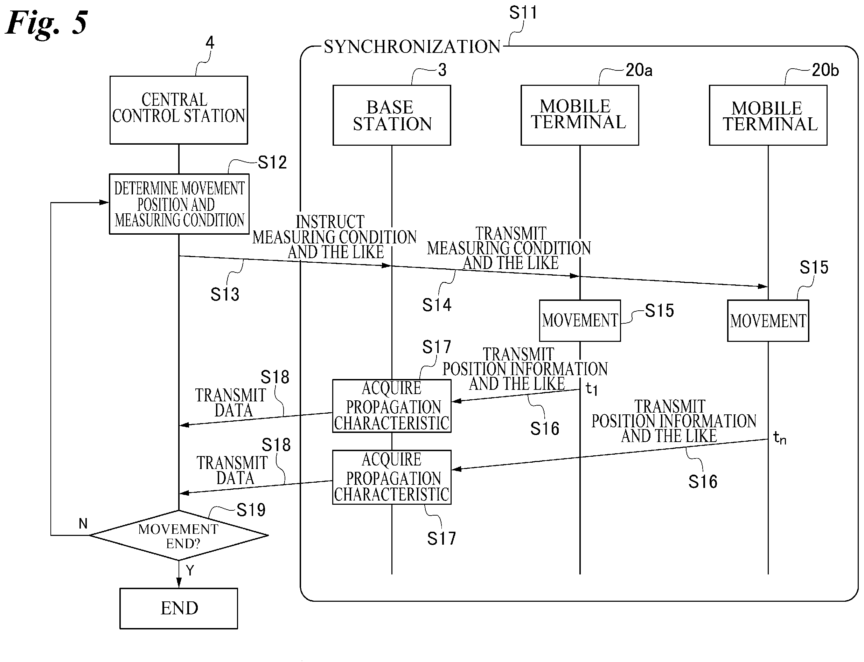

Fig. 5 illustrates a measurement sequence of a radio wave propagation characteristic in the measurement system 1. In this measurement sequence, a case in which two mobile terminals 20a, 20b are moved with respect to the base station 3 is described as an example. While measuring the propagation characteristic by moving a plurality of mobile terminals 20 with respect to one base station 3 allows achieving an increased speed of the measurement and a visualization of a wide range in a measurement target space, the configuration is not limited thereto, and any configuration is included insofar as one or more mobile terminals 20 are moved.

First, in Step S11, the mobile terminals 20 installed in the moving bodies 2 are synchronized with the base station 3. At this time, the mobile terminals 20a, 20b are synchronized with the base station 3 in time, frequency, and phase. While any well-known technique may be used for the synchronization, Wi-Wi described above may be used for the synchronization.

Next, the process proceeds to Step S12, and the central control station 4 determines respective movement positions (x, y, z) of the mobile terminals 20a, 20b, a measuring condition (f, p), and a measurement time slot. Here, **x, y, z** is a position composed of an x-coordinate, a y-coordinate, and a z-coordinate of the measurement target space, **f** is a frequency of a transmitted and received radio wave, and **p** is a polarized wave (vertical or horizontal) used in the measurement. When the position information can be acquired at the mobile terminal 20 side, the central control station 4 may acquire the position information of an initial position from the mobile terminal 20 before starting the measurement. This allows the central control station 4 to give instructions on a more efficient movement position to each mobile terminal 20.

Next, the process proceeds to Step S13, and the central control station 4 instructs the base station 3 on the respective movement positions (x, y, z) of the mobile terminals 20a, 20b, the measuring condition (f, p), and the measurement time slot. These instructions are transmitted from the central control station 4 to the base station 3 through wired communication or wireless communication as described above. The base station 3 receives the instructions via the control station communication unit 36.

Next, the process proceeds to Step S14, and the base station 3 transmits the respective movement positions (x, y, z) of the mobile terminals 20a, 20b, the measuring condition (f, p), and the measurement time slot instructed from the central control station 4 to the respective mobile terminals 20a, 20b via the wireless communication unit 31 under the control by the control unit 35.

Next, the process proceeds to Step S15, and the respective mobile terminals 20a, 20b move in directions of the respective movement positions received from the base station 3 via the wireless communication units 21 under the control by the movement control units 27. As a result of the move, the mobile terminals 20a, 20b acquire position information at the movement positions of arrival via the position information acquiring units 23, and measure the radio wave propagation characteristic measured at the movement positions by the propagation characteristic measuring units 22 based on the received measurement time slot. In the example of Fig. 5, the mobile terminal 20a measures radio wave reception time $t_1$

as the radio wave propagation characteristic and acquires position information $(x_1, y_1, z_1)$, and the mobile terminal 20b measures radio wave reception time $t_2$ as the radio wave propagation characteristic and acquires position information $(x_2, y_2, z_2)$. The mobile terminals 20a, 20b may temporarily store the acquired reception time $t_n$ and position information $(x_n, y_n, z_n)$ in the storage units 24.

Next, the process proceeds to Step S16, and the mobile terminal 20a transmits the acquired reception time $t_1$ and position information $(x_1, y_1, z_1)$ to the base station 3 via the wireless communication unit 21, and the mobile terminal 20b transmits the acquired reception time $t_2$ and position information $(x_2, y_2, z_2)$ to the base station 3.

In Step S17, the base station 3 acquires a propagation characteristic $h_{1,k} = h_{1,k} (f, p, t_1)$ of the radio wave transmitted and received between the base station 3 and the mobile terminal 20a based on the reception time $t_1$ received from the mobile terminal 20a, and acquires a propagation characteristic $h_{2,k} = h_{2,k} (f, p, t_2)$ of the radio wave transmitted and received between the base station 3 and the mobile terminal 20b based on the reception time $t_2$ received from the mobile terminal 20b. As the radio wave propagation characteristic $h_{n,k}$ to be acquired, since the frequency $f$ itself of the radio wave is already known at the base station 3 side, the phase itself as the propagation characteristic can be quantitatively acquired insofar as the reception time $t_n$ can be acquired. The radio wave propagation characteristic $h_{n,k}$ to be acquired may include the frequency $f$ and the reception time $t_n$ without a requirement of acquiring the phase.

Similarly, the base station 3 acquires a propagation characteristic $h_{1,k} = h_{1,k} (f, p, x_1, y_1, z_1)$ of the radio wave transmitted and received between the base station 3 and the mobile terminal 20a based on the position information $(x_1, y_1, z_1)$ received from the mobile terminal 20a, and acquires a propagation characteristic $h_{2,k} = h_{2,k} (f, p, x_2, y_2, z_2)$ of the radio wave transmitted and received between the base station 3 and the mobile terminal 20b based on the position information $(x_2, y_2, z_2)$ received from the mobile terminal 20b.

Thus, the radio wave propagation characteristic can be acquired by the base station 3 and the mobile terminals 20a, 20b cooperating with one another. The above-described example has described a case where the mobile terminal 20 side acquires the reception time $t_n$ and the position information $(x_n, y_n, z_n)$ and transmits them to the base station 3, and the base station 3 side acquires the phase as the propagation characteristic based on the reception time $t_n$ received from the mobile terminal 20 and the already-known frequency $f$. However, the present invention is not limited to this, the mobile terminal 20 side may acquire the reception time $t_n$ and the position information $(x_n, y_n, z_n)$, and the mobile terminal 20 side may acquire the phase as the propagation characteristic based on a value of a preliminarily acquired frequency $f$ and transmit it to the base station 3. The base station 3 only acquires the position information $(x_n, y_n, z_n)$ and the propagation characteristics that are all acquired at the mobile terminal 20 side.

Next, the process proceeds to Step S18, and the base station 3 transmits the data $h_{n,k} (f, p, x_n, y_n, z_n), h_{n,k} (f, p, t_n)$ in which the radio wave propagation characteristics acquired by the cooperation with the mobile terminals 20a, 20b as described above are associated with the position information $(x_n, y_n, z_n)$ to the central control station 4. After the acquisition of the data $h_{n,k} (f, p, x_n, y_n, z_n), h_{n,k} (f, p, t_n)$ as described above, the central control station 4 determines whether or not scheduled moves on movement paths of the mobile terminals 20a, 20b have all ended in Step S19. As a result, when it is determined that the scheduled moves on movement paths of the mobile terminals 20a, 20b have all ended, the processing operation ends. On the other hand, when it is determined that not all the scheduled moves on movement paths of the mobile terminals 20a, 20b have ended, the process returns to Step S12, and the central control station 4 determines the next movement positions $(x, y, z)$ of the mobile terminals 20a, 20b, the measuring condition $(f, p)$, and the next measurement time slot. Then, Steps S12 to S19 described above are repeatedly executed.

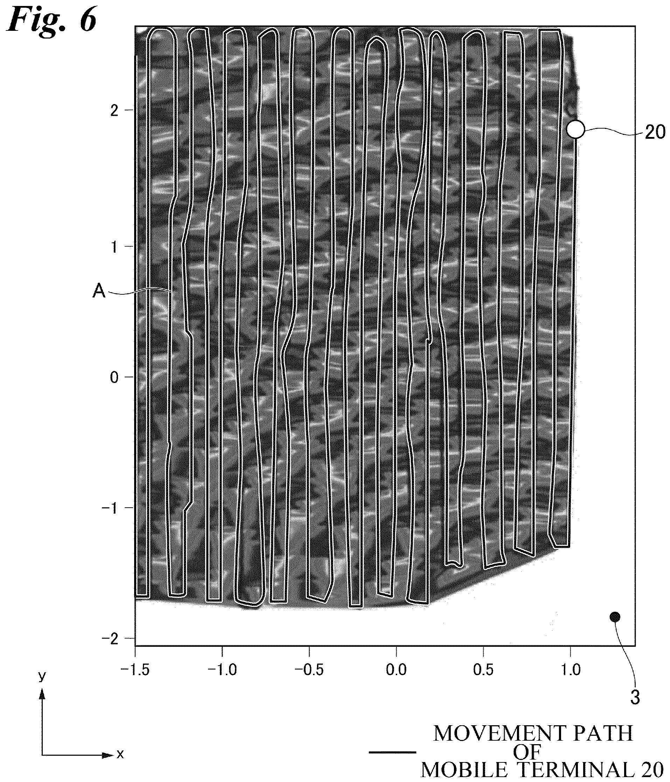

By sequentially repeating this processing operation on a time-series basis, the propagation characteristic of the radio wave wirelessly communicated between the mobile terminal 20 and the base station 3 can be sequentially measured on a time-series basis in association with the respective position information of the mobile terminal 20. Consequently, for example, as illustrated in Fig. 6, a map illustrating a distribution of the radio wave propagation characteristic can be created. In Fig. 6, the phase as the propagation characteristic of the radio wave wirelessly communicated between the base station 3 and the mobile terminal 20 moving on the movement path indicated by an arrow in the drawing with respect to the base station 3 is mapped on two-dimensional coordinates of $x, y$ at a $z$-coordinate. It is seen that the propagation characteristics measured at respective positions can be expressed with more accurate shading. The reason why such highly accurate mapping of the propagation characteristics can be achieved is that the mobile terminals 20a, 20b are synchronized with the base station 3 in time, frequency, and phase using a technique including Wi-Wi described above, and that the propagation characteristic is acquired in association with the position information of the mobile terminal 20.

In the map of Fig. 6, two-dimensional coordinates of $x, y$ at other $z$-coordinates can be similarly mapped. The map is not limited to that of the two-dimensional coordinate system, and may be expressed by a map of a three-dimensional coordinate system of $x$-, $y$-, and $z$-coordinates.

The central control station 4 can indicate the measured propagation characteristic to a user on such a two-dimensional coordinate or three-dimensional coordinate map of the measurement target space on which the position information of the mobile terminal 20 is indicated. The user can design a movement plan of the mobile terminal 20 in consideration of the communication quality by visually confirming the propagation characteristic drawn on the map, and can, for example, consider an object arrangement that can improve the communication quality in the space.

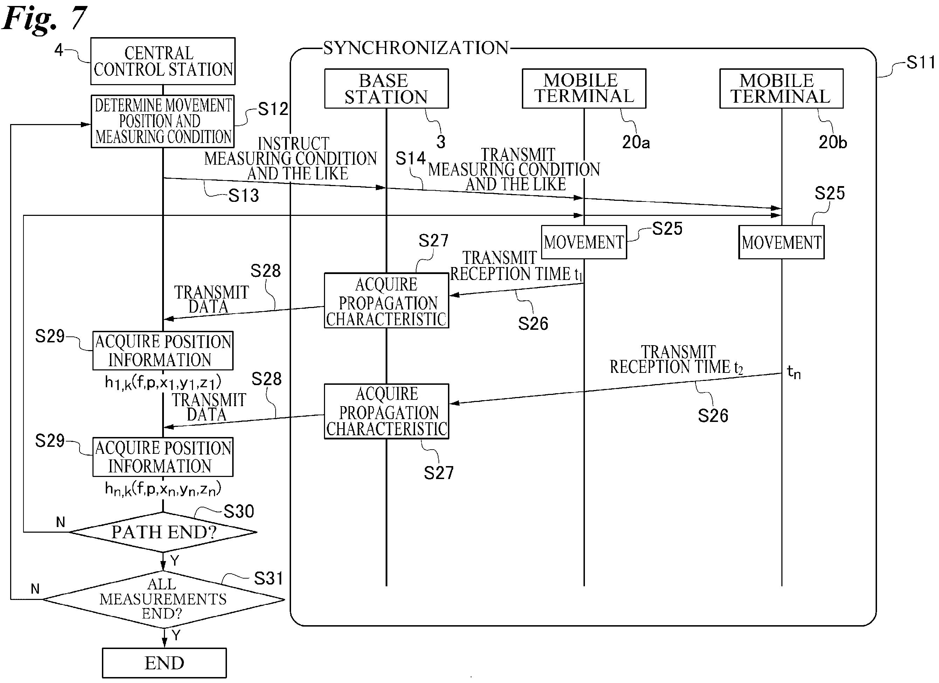

The measurement sequence of the radio wave propagation characteristic in the measurement system 1 is not limited to the case where the position information is acquired at the respective mobile terminal 20 sides as described in the above example. For example, as illustrated in Fig. 7 below, a measurement sequence in which the position information of the respective mobile terminals 20 is sequentially acquired at the central control station 4 side may be applied. In the measurement sequence illustrated in Fig. 7, the same reference numerals of Step S are attached to the same steps as those in the above-described measurement sequence illustrated in Fig. 5, and the explanation is omitted below.

The processing operation of Steps S11 to S14 is similar to that described above. However, in Step S12, the central control station 4 may determine movement paths instead of determining the respective movement positions (x, y, z) of the respective mobile terminals 20a, 20b, and may notify the mobile terminals 20a, 20b of them through Steps S13 and S14.

Next, in Step S25, the respective mobile terminals 20a, 20b move by themselves along the movement paths received from the base station 3 via the wireless communication units 21. In this Step S25, the mobile terminals 20a, 20b measure only the radio wave reception time $t_n$ by the propagation characteristic measuring units 22 at the movement positions without acquiring the position information.

Next, the process proceeds to Step S26, the mobile terminal 20a transmits the acquired reception time $t_1$ to the base station 3 via the wireless communication unit 21, and the mobile terminal 20b transmits the acquired reception time $t_2$ to the base station 3.

In Step S27, the base station 3 acquires the propagation characteristic $h_{1,k}$ of the radio wave transmitted and received between the base station 3 and the mobile terminal 20a, and acquires the propagation characteristic $h_{2,k}$ of the radio wave transmitted and received between the base station 3 and the mobile terminal 20b based on the reception time $t_1$ and the reception time $t_2$ received from the respective mobile terminals 20a, 20b, respectively.

Next, the process proceeds to Step S28, and the base station 3 transmits the data $h_{n,k}$ (f, p, $t_n$) of the radio wave propagation characteristic acquired by the cooperation with the mobile terminals 20a, 20b as described above to the central control station 4.

After the acquisition of the data $h_{n,k}$ (f, p, $t_n$) as described above, the central control station 4 acquires the position information ($x_1$, $y_1$, $z_1$) and the position information ($x_2$, $y_2$, $z_2$) for the mobile terminals 20a, 20b respectively in Step S29. The position information of the mobile terminals 20a, 20b may be acquired by using, for example, motion capture, a camera image of the mobile terminal 20, and sensing information detected by sensors installed at respective positions. The central control station 4 associates the data $h_{n,k}$ (f, p, $t_1$) of the radio wave propagation characteristic with the position information ($x_n$, $y_n$, $z_n$) in Step S29. As a result, the data $h_{n,k}$ (f, p, $x_n$, $y_n$, $z_n$) and the data $h_{n,k}$ (f, p, $t_n$) in which the radio wave propagation characteristic acquired by the cooperation with the mobile terminal 20 is associated with the position information ($x_n$, $y_n$, $z_n$) can be acquired. That is, the data $h_{1,k}$ (f, p, $x_1$, $y_1$, $z_1$) can be acquired for the mobile terminal 20a, and the data $h_{2,k}$ (f, p, $x_2$, $y_2$, $z_2$) can be acquired for the mobile terminal 20b.

Next, the process proceeds to Step S30, and when it is determined that the scheduled moves on movement paths of the mobile terminals 20a, 20b have all ended, the process proceeds to Step S31. On the other hand, when it is determined that not all the scheduled moves on movement paths of the mobile terminals 20a, 20b have ended, the process returns to Step S25, the mobile terminals 20a, 20b move along the movement paths, and the above-described operation is repeatedly executed.

When the process proceeds to Step S31, it is determined whether or not all the measurements have ended. When not all the measurements have ended, the process returns to Step S12, and the central control station 4 determines the respective movement positions (x, y, z) of the respective mobile terminals 20a, 20b again, notifies the mobile terminals 20a, 20b of them through Steps S13 and S14, and repeats the following processing operation.

Also in the measurement sequence illustrated in Fig. 7, similarly, the propagation characteristic of the radio wave wirelessly communicated between the mobile terminal 20 and the base station 3 can be sequentially measured on a time-series basis in association with the respective position information of the mobile terminal 20. Consequently, a map illustrating a distribution of the radio wave propagation characteristic in a space of two-dimensional coordinates or three-dimensional coordinates can be created.

While the above-described embodiment has been described with an example in which the propagation characteristic is acquired by receiving a radio wave transmitted from the base station 3 side by the mobile terminal 20, measuring the reception time $t_n$, and returning it to the base station 3, it is not limited thereto. The propagation characteristic may be acquired based on reception time at the base station 3 side of a radio wave transmitted from the mobile terminal 20 toward the base station 3.

According to the present invention, respective events in the measurement target space can be determined based on a difference between the distribution of the propagation characteristic and a preliminarily acquired reference propagation characteristic.

As the events in the present invention, phenomena disrupting radio waves, for example, reflection, transmission, diffraction, and absorption by a structural body, a moving body, or the like nearby, are mainly assumed. Additionally, various matters including a change of weather, an influence of another electromagnetic wave nearby, and the like are assumed, but the events are not limited thereto. In the present invention, by measuring the radio wave propagation characteristic, the respective events in the measurement target space can be determined or estimated.

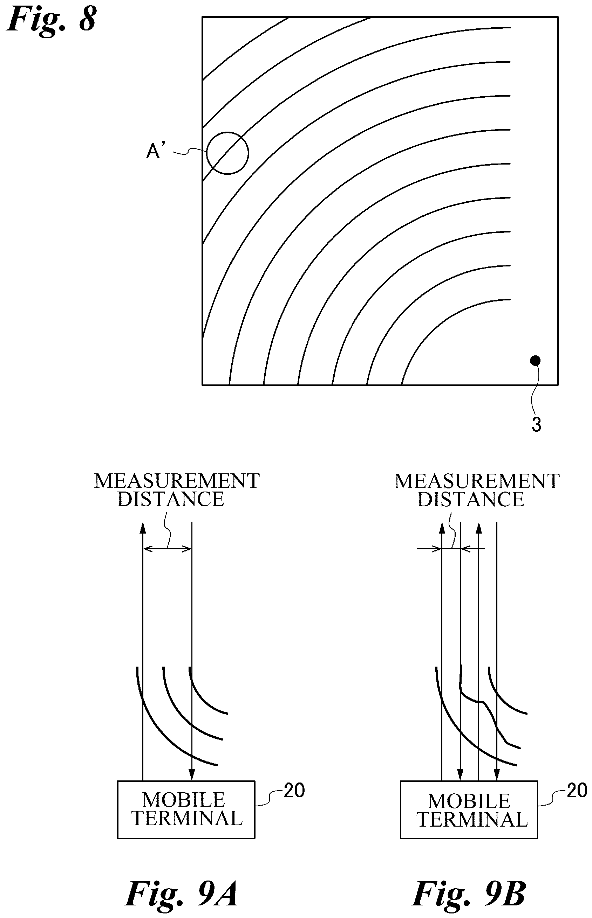

Fig. 8 illustrates an example of a distribution of a reference propagation characteristic acquired in advance. The reference propagation characteristic illustrated in Fig. 8 is acquired by performing a calculation or a measurement for exactly the same space as the measurement target space illustrated in Fig. 6 using a well-known simulation technique or a well-known measurement technique in advance. The reference propagation characteristic may be compared to a theoretical value. The reference propagation characteristic is superimposed on and compared with the radio wave propagation characteristic measured for the same measurement target space by the measurement system 1. As a result, it is ideally considered that the distribution of the reference propagation characteristic and the distribution of the measured propagation characteristic are mutually matched. On the other hand, when it is assumed that there is a difference between the distribution of the measured propagation characteristic and the distribution of the preliminarily acquired reference propagation characteristic, it can be considered that some change in the event has occurred in the measurement target space.

Thus, the respective events in the measurement target space can be automatically determined based on the difference between the distribution of the measured propagation characteristic and the distribution of the preliminarily acquired reference propagation characteristic. For example, it can be said that there is a difference in distribution between an area A in the propagation characteristic of Fig. 6 and a corresponding area A' in the reference propagation characteristic illustrated in Fig. 8. Therefore, it can be determined that some change in the event has occurred in the area A.

For the automatic detection of the difference in distribution, the determination may be performed, for example, based on whether or not a phase difference between the measured propagation characteristic and the reference propagation characteristic in the respective areas exceeds a preliminarily set threshold.

For example, when the difference between the distribution of the measured propagation characteristic and the distribution of the preliminarily acquired reference propagation characteristic is caused by an influence of a direct wave or a reflected wave, this difference can be used to separate the direct wave and the reflected wave. An interference with the reflected wave can be used to inspect an internal structure similarly to a ground-penetrating radar. When the measurement target space includes a construction that is an object of non-destructive inspection, for example, a bridge, a tunnel, an indoor facility, and the like, an abnormal change inside the construction can be detected based on the difference between the distribution of the measured propagation characteristic and the distribution of the preliminarily acquired reference propagation characteristic. The use of this allows a measurement and a visualization of the propagation characteristic in a complicated environment having difficulty in simulation. Further, a communication characteristic of wireless communication inside a product (a vehicle, a vessel, an architectural construction, and the like) can be visualized to be used for product design.

By changing the frequency of the radio wave in the actual measurement and visualizing the radio wave propagation characteristic in the mutually different frequencies, the internal structure of the construction as an object of non-destructive inspection can be inspected with higher resolution. By visualizing a plurality of different propagation characteristics having largely different frequencies, a size and a characteristic of an object of non-destructive inspection can be obtained. Further, the use of a property with which the propagation characteristic varies depending on an internal structure of a wall conversely opens the way for estimating the position of the mobile terminal 20.

Especially, according to the present invention, by transmitting a known signal pattern between the base station 3 and the mobile terminal 20, the above-described propagation characteristics are measured. At this time, since the synchronization in frequency and time allows the synchronization in phase reference between the base station 3 and the mobile terminal 20 as described above, the phase especially can be accurately measured as the propagation characteristic.

The automatic determination of each event can be performed simply with the distribution of the measured propagation characteristic alone without the distribution of the above-described reference propagation characteristic. In this case, the respective events in the measurement target space may be determined based on the degree of disturbance of the distribution of the propagation characteristic. For example, as illustrated in Fig. 9A, when there is no disturbance in the distribution of the propagation characteristic, the phase has a streamline shape in the distribution. In contrast, when there is a disturbance in the distribution of the propagation characteristic, the phase is disturbed and deviates from what is called a streamline shape as illustrated in Fig. 9B. Therefore, by automatically determining whether or not the disturbance of the distribution of the phase has occurred, the above-described change in the event can be detected. For the disturbance of the distribution of the phase, for example, an area in which the phase rapidly changes between adjacent areas may be automatically extracted, or the disturbance of the distribution of the phase may be determined based on whether or not a phase gradient between adjacent areas has exceeded a threshold.

In the present invention, it is preferred to control the move and the measurement distance of the mobile terminal 20 such that an interval between adjacent measurement points becomes, for example, 1/8 or less of the wavelength of the radio wave. This is because the interval between adjacent measurement points exceeding 1/8 of the wavelength of the radio wave decreases the resolution of the mapped propagation characteristic, and the analysis with high accuracy cannot be achieved. However, the present invention is not limited to the case where the interval between adjacent measurement points is limited to 1/8 or less of the wavelength of the radio wave, and it is needless to say that the interval between adjacent measurement points may exceed it. At this time, a moving speed of the mobile terminal 20 may be determined based on the frequency $f$ and a coherence time of a communication path in a surrounding environment.

At this time, when there is no disturbance in the distribution of the phase as illustrated in Fig. 9A, the move and the measurement distance of the mobile terminal 20 are controlled such that an interval between adjacent measurement points becomes, for example, 1/8 or less of the wavelength of the radio wave. At this time, when there is a disturbance in the distribution of the phase as illustrated in Fig. 9B, the move and the measurement distance of the mobile terminal 20 may be controlled with a further shortened interval between adjacent measurement points. In this case, the disturbance of the phase may be determined based on whether or not the phase value measured such that the interval between adjacent measurement points becomes about 1/8 of the wavelength of the radio wave is different from a peripheral observation point, or whether or not a difference from a peripheral observation point is within a predetermined range. Since it is assumed that some change in the event has occurred at the position at which the disturbance of the phase distribution has occurred, by more shortening the interval between adjacent measurement points for the position, the propagation characteristic can be measured with more reduced pitches in detail. Consequently, information on the change in the event can be acquired in more detail.

Thus, according to the present invention, the interval between adjacent measurement points can be controlled based on the degree of disturbance of the distribution of the propagation characteristic.

According to the present invention, the wireless communication unit 21 of the mobile terminal 20 may be provided with a plurality of antennas. Accordingly, switching the antennas for reception allows measuring the propagation characteristic of a plurality of positions at the same position without moving the mobile terminal 20.

According to the present invention, installing an array antenna in the wireless communication unit 21 of the mobile terminal 20 allows also acquiring information on a direction in which the radio wave is transmitted.

Incidentally, the shape of the mobile terminal 20 causes directionality of respective antennas constituting the wireless communication unit 21 in some cases. As a method for canceling the directionality, for example, an attitude sensor attached to the mobile terminal 20 may be used to correct the directionality of the antenna. In this case, an attitude angle is measured via the attitude sensor (not illustrated) provided at the mobile terminal 20, and the measured phase value is corrected using a cross polarization discrimination of the antenna.

As another method for canceling the directionality, the measurement may be performed by controlling the base station 3 and the mobile terminal 20 so as to always have the same surfaces facing in the direction based on the information of the attitude sensor, thereby suppressing the influence of the directionality caused by the influence of the shape or the like of the mobile terminal 20. In this case, the direction of the antenna of the base station 3 may be controlled depending on the position of the mobile terminal 20.

The directionality of the antenna caused by the influence of the shape of the mobile terminal 20 may be used to identify the directions of the antenna and the mobile terminal 20 in addition to the positions of the antenna and the mobile terminal 20.

A plurality of the moving bodies 2 may be used for the measurement, and the measurements of the radio wave propagation characteristic measured by the respective moving bodies 2 may be superimposed to correct and complement the measurement of the radio wave propagation characteristic.

In the present invention, in addition to the display of the map indicating the distribution of the propagation characteristic to the user, the move of the mobile terminal 20 may be controlled based on the determination result of each event. In this case, the mobile terminal 20 may be moved based on the communication quality obtained from the distribution of the acquired propagation characteristic. In this case, the mobile terminal 20 may be moved toward a position at which the communication quality is higher. When the moving body 2 that includes the mobile terminal 20 is a robot, the behavior of the robot may be controlled. It may be reflected on the position control of the antenna by multi input multi output (MIMO) communication.

Further, according to the present invention, the wireless communication unit 21 may be preliminarily provided with two antennas including a horizontally polarized wave vertical meter. The state of the polarized wave may be estimated using the antennas, and this may be included in the propagation characteristics. For this polarized wave, a vertically polarized wave, a horizontally polarized wave, and a circularly polarized wave may be each measured, and the polarized wave may be reflected on the propagation characteristics based on the measurement.

In this case, for example, the horizontally polarized wave and the vertically polarized wave may be measured at first with antennas that can detect respective horizontally and vertically polarized waves. The propagation characteristic on which the vertically polarized wave measured thus is reflected is $h_{n,k}$ (f, p = V, $x_n$, $y_n$, $z_n$), and the propagation characteristic on which the horizontally polarized wave is reflected is $h_{n,k}$ (f, p = H, $x_n$, $y_n$, $z_n$).

Based on the propagation characteristics on which the respective horizontally polarized wave and vertically polarized wave are reflected, the circularly polarized wave can be further calculated. In this case, any polarized wave $\boldsymbol{p}$ (as a parameter, a radio wave propagation characteristic $h_{n,k}$ (f, p($\rho_{HV}$), $x_n$, $y_n$, $z_n$) relative to a polarization ratio $\rho_{HV}$) is

obtained by a formula (1) below.
[Formula 1]

$$h_{n,k}(f, p(\rho_{HV}), x_n, y_n, z_n) = \frac{1}{\sqrt{1 + \rho_{HV}\rho_{HV}^*}} \begin{bmatrix} 1 \\ \rho_{HV} \end{bmatrix} \begin{bmatrix} h_{n,k}(f, p = H, x_n, y_n, z_n) \\ h_{n,k}(f, p = V, x_n, y_n, z_n) \end{bmatrix}$$

$$(1)$$

Here, $\rho_{HV}$ is a polarization ratio, and for example, $\rho_{HV}$ becomes 1 in a horizontally polarized wave, $\infty$ in a vertically polarized wave, *-j* in a right-handed circularly polarized wave, and *j* in a left-handed circularly polarized wave. $\rho_{HV}^*$ is a complex conjugate of the polarization ratio $\rho_{HV}$.

By assigning numerical values in the formula (1), the radio wave propagation characteristic to which the influence of the circularly polarized wave is added can be acquired.

DESCRIPTION OF REFERENCE SIGNS

1:      Measurement system
2:      Moving body
3:      Base station
4:      Central control station
20:     Mobile terminal
21:     Wireless communication unit
22:     Propagation characteristic measuring unit
23:     Position information acquiring unit
24:     Storage unit
25:     Control unit
26:     Time and frequency synchronization unit
27:     Movement control unit
31:     Wireless communication unit
32:     Propagation characteristic measuring unit
34:     Storage unit
35:     Control unit
36:     Control station communication unit
37:     Time and frequency synchronization unit

**Claims**

1.  A measurement system for a radio wave propagation characteristic in a space, comprising:

    a base station; and
    a mobile terminal wirelessly communicable with the base station, wherein
    the base station and the mobile terminal are mutually synchronized in time, frequency, and phase, and
    a propagation characteristic of a radio wave wirelessly communicated between the mobile terminal moving in a measurement target space and the base station is sequentially measured on a time-series basis in association with each piece of position information of the mobile terminal.

2.  The measurement system for a radio wave propagation characteristic in a space according to claim 1, wherein as the propagation characteristic, reception time and a frequency, or a phase of the radio wave is measured.

3.  The measurement system for a radio wave propagation characteristic in a space according to claim 2, wherein as the propagation characteristic, a polarized wave of the radio wave is measured.

4. The measurement system for a radio wave propagation characteristic in a space according to claim 1, wherein the base station and the mobile terminal are mutually synchronized using wireless two-way interferometry (Wi-Wi).

5. The measurement system for a radio wave propagation characteristic in a space according to claim 1, wherein the measured propagation characteristic is indicated on a two-dimensional coordinate or three-dimensional coordinate map of the measurement target space on which the position information of the mobile terminal is indicated.

6. The measurement system for a radio wave propagation characteristic in a space according to claim 1, wherein each of events in the measurement target space is determined based on a distribution of the propagation characteristic in the measurement target space of two-dimensional coordinates or three-dimensional coordinates on which the position information of the mobile terminal is indicated.

7. The measurement system for a radio wave propagation characteristic in a space according to claim 5, wherein each of events in the measurement target space is determined based on a difference between a distribution of the propagation characteristic and a distribution of a preliminarily acquired reference propagation characteristic.

8. The measurement system for a radio wave propagation characteristic in a space according to claim 5, wherein each of events in the measurement target space is determined based on a degree of disturbance of a distribution of the propagation characteristic.

9. The measurement system for a radio wave propagation characteristic in a space according to claim 6, wherein a movement of the mobile terminal is controlled based on a result of the determination of each of the events.

10. The measurement system for a radio wave propagation characteristic in a space according to claim 1, wherein an interval between adjacent measurement points is controlled based on a degree of disturbance of a distribution of the propagation characteristic.

## *Fig. 1*

1

2

2

3

4

## *Fig. 2*

2

20

POSITION INFORMATION ACQUIRING UNIT ~23

WIRELESS COMMUNICATION UNIT ~21

CONTROL UNIT ~25

STORAGE UNIT 24

PROPAGATION CHARACTERISTIC MEASURING UNIT ~22

MOBILE TERMINAL

MOVEMENT CONTROL UNIT ~27

TIME AND FREQUENCY SYNCHRONIZATION UNIT ~26

MOVING BODY

## *Fig. 3*

3

| 36 CONTROL STATION COMMUNICATION UNIT | 31 WIRELESS COMMUNICATION UNIT |

35 CONTROL UNIT

34 STORAGE UNIT

32 PROPAGATION CHARACTERISTIC MEASURING UNIT

BASE STATION

37 TIME AND FREQUENCY SYNCHRONIZATION UNIT

## *Fig. 4*

1

CENTRAL CONTROL STATION — 4

SYNCHRONIZATION

BASE STATION — 3

... $h_{1,k}$ $h_{2,k}$ $h_{n,k}$ ...

20a MOBILE TERMINAL $(x_1,y_1,z_1,t_1)$

20b MOBILE TERMINAL $(x_2,y_2,z_2,t_2)$

...

20n MOBILE TERMINAL $(x_n,y_n,z_n,t_n)$

**Fig. 5**

S11 SYNCHRONIZATION

| 4 CENTRAL CONTROL STATION | 3 BASE STATION | 20a MOBILE TERMINAL | 20b MOBILE TERMINAL |

S12 DETERMINE MOVEMENT POSITION AND MEASURING CONDITION

S13 INSTRUCT MEASURING CONDITION AND THE LIKE

S14 TRANSMIT MEASURING CONDITION AND THE LIKE

S15 MOVEMENT

S15 MOVEMENT

S17 ACQUIRE PROPAGATION CHARACTERISTIC

S16 TRANSMIT POSITION INFORMATION AND THE LIKE $t_1$

S18 TRANSMIT DATA

S16 TRANSMIT POSITION INFORMATION AND THE LIKE $t_n$

S18 TRANSMIT DATA

S17 ACQUIRE PROPAGATION CHARACTERISTIC

S19 MOVEMENT END?

N

Y

END

EP 4 545 982 A1

*Fig. 6*

MOVEMENT PATH
OF
MOBILE TERMINAL 20

**Fig. 7**

SYNCHRONIZATION — S11

CENTRAL CONTROL STATION (4)

BASE STATION (3)

MOBILE TERMINAL (20a)

MOBILE TERMINAL (20b)

DETERMINE MOVEMENT POSITION AND MEASURING CONDITION — S12

INSTRUCT MEASURING CONDITION AND THE LIKE — S13

TRANSMIT MEASURING CONDITION AND THE LIKE — S14

S25

S25 — MOVEMENT

MOVEMENT — S25

ACQUIRE PROPAGATION CHARACTERISTIC — S27

TRANSMIT RECEPTION TIME $t_1$ — S26

TRANSMIT DATA — S28

ACQUIRE POSITION INFORMATION — S29

$h_{1,k}(f,p,x_1,y_1,z_1)$

TRANSMIT DATA — S28

ACQUIRE PROPAGATION CHARACTERISTIC — S27

TRANSMIT RECEPTION TIME $t_2$ — S26

$t_n$

ACQUIRE POSITION INFORMATION — S29

$h_{n,k}(f,p,x_n,y_n,z_n)$

PATH END? — S30  N / Y

ALL MEASUREMENTS END? — S31  N / Y

END

EP 4 545 982 A1

## Fig. 8

A'

3

MEASUREMENT
DISTANCE

MOBILE
TERMINAL — 20

## Fig. 9A

MEASUREMENT
DISTANCE

MOBILE
TERMINAL — 20

## Fig. 9B

**INTERNATIONAL SEARCH REPORT**

| International application No. |
|---|
| **PCT/JP2023/021571** |

| **A.** | **CLASSIFICATION OF SUBJECT MATTER** |
|---|---|

*G01R 29/08*(2006.01)i
FI: G01R29/08 B; G01R29/08 Z

According to International Patent Classification (IPC) or to both national classification and IPC

| **B.** | **FIELDS SEARCHED** |
|---|---|

Minimum documentation searched (classification system followed by classification symbols)

G01R29/08

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| Y | WO 2021/065000 A1 (NIPPON TELEGRAPH AND TELEPHONE CORP.) 08 April 2021 (2021-04-08) <br> paragraphs [0001]-[0051], fig. 1-4 | 1-10 |
| Y | JP 2002-152191 A (MATSUSHITA ELECTRIC INDUSTRIAL CO., LTD.) 24 May 2002 (2002-05-24) <br> paragraphs [0152], [0266]-[0268] | 1-10 |
| Y | JP 2004-266818 A (MATSUSHITA ELECTRIC INDUSTRIAL CO., LTD.) 24 September 2004 (2004-09-24) <br> paragraphs [0007], [0088]-[0090] | 2-3 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **08 August 2023** | **22 August 2023** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

| INTERNATIONAL SEARCH REPORT | | International application No. |
| :---: | :---: | :---: |
| Information on patent family members | | **PCT/JP2023/021571** |

| Patent document cited in search report | Publication date (day/month/year) | Patent family member(s) | Publication date (day/month/year) |
| :---: | :---: | :--- | :---: |
| WO 2021/065000 A1 | 08 April 2021 | US 2022/0345927 A1 paragraphs [0001]-[0053], fig. 1-4 | |
| JP 2002-152191 A | 24 May 2002 | US 2002/0181439 A1 paragraphs [0122], [0243]-[0245] WO 2002/019569 A1 EP 1233547 A1 CN 1394399 A CN 1913395 A | |
| JP 2004-266818 A | 24 September 2004 | US 2006/0003710 A1 paragraphs [0007], [0113]-[0116] WO 2004/073226 A1 EP 1548968 A1 CN 1706138 A | |

Form PCT/ISA/210 (patent family annex) (January 2015)

**REFERENCES CITED IN THE DESCRIPTION**

**Patent documents cited in the description**

- JP 2003264494 A
- JP 2014006851 A